# FASCICULE DE BREVET EUROPEEN

(11) **EP 0 561 691 B1**
(45) Date de publication et mention de la délivrance du brevet: **14.01.1998**
(21) Numéro de dépôt: 93400670.1
(22) Date de dépôt: 16.03.1993
(51) Int. Cl.: C12C 7/165, B01D 25/164, B01D 25/172, B01D 25/19

(54) **Implantation de filtre à maische**
Einbau eines Maischefilters
Mash filter implantation

(30) Priorité: 19.03.1992 FR 9203302
(43) Date de publication de la demande: 22.09.1993
(73) Titulaire: NORDON & CIE, F-54001 Nancy Cèdex (FR)
(72) Inventeur: Dieux, Daniel, F-54420 Pulnoy (FR); Sauvage, René, F-54690 Eulmont (FR); Schaaff, Gérard, F-54770 Laitre s/Amance (FR)
(74) Mandataire: Picard, Jean-Claude Georges

(56) Documents cités:
- DE-A- 3 816 886
- DE-C- 131 278
- GB-A- 920 379
- US-A- 1 749 080

## Description

La présente invention concerne un nouveau mode d'implantation de filtre à maische dans une usine de brasserie comportant, dans un espace de brassage à deux niveaux séparés par une dalle portante de plancher, une cuve matière, une chaudière à houblonner et un filtre-presse à maische à plateaux verticaux, ce filtre comportant un ensemble de cadres et de plateaux propres à être serrés entre une tête fixe et un bouclier de fermeture manoeuvré par un vérin en appui sur une tête réglable, les dispositifs de transfert de matière, d'agitation ou d'accès étant prévus au niveau inférieur, les cheminées d'extraction de buées et les couvercles étant visibles au niveau supérieur.

Pour la constitution d'un tel filtre, le filtre-presse à cadres et plateaux ou à plateaux chambrés se développe beaucoup depuis une dizaine d'années en raison de ses avantages, car il est d'une bonne accessibilité, fournit une bonne productivité et offre une grande facilité de nettoyage.

Ainsi les filtres à maische (variante des filtres-presse ) connaissent un renouveau en brasserie aux dépens, le cas échéant, de la cuve-filtre. Des modifications ont été apportées pour en améliorer le fonctionnement et en diminuer le coût ; ainsi la déposante a-t-elle déposé une demande de brevet sur une construction de filtre à plateaux chambrés (EP-A-0 486 335).

Toutefois les brasseurs reprochent au filtre à maische à plateaux verticaux la difficulté qu'il y a à l'intégrer dans l'environnement d'une salle de brassage dans sa conception habituelle.

En effet, dans les salles de brassage les vaisseaux (cuve matière, chaudière à houblonner, cuve-filtre) sont placés sur deux niveaux de façon qu'au niveau supérieur seuls les cheminées d'extraction de buées et les couvercles sont visibles. Généralement ces ensembles sont revêtus à ce niveau d'acier inoxydable ou de cuivre, donnant un ensemble très propre. Au niveau inférieur sont assemblés tous les dispositifs de transfert de matière, d'agitation ou d'accès.

Un filtre à maische est une structure mécanique composée de deux têtes reliées par des poutres servant à la fois de supports aux cadres et plateaux et de rails de roulement. Les deux structures de tête doivent être scellées au sol pour résister aux efforts de flexion, et les poutres doivent être dimensionnées pour garder une flèche raisonnable lorsque le filtre est plein. Typiquement, une flèche acceptable est au maximum de 10 mm sous la charge répartie de 8 tonnes. Si cette flèche est excessive, les joints entre cadres et plateaux subissent des cisaillements pouvant provoquer des manques d'étanchéité et des usures prématurées de ces joints. Il est souvent nécessaire de limiter cette flèche par une augmentation de la force de serrage, et les poutres doivent alors être dimensionnées pour résister à cet effort de serrage.

Par ailleurs, l'évacuation des drèches nécessite la mise en place sous le filtre d'un système de transfert. A l'ouverture du filtre, une grande quantité de buées est lâchée dans la salle malgré les dispositifs d'aspiration qui peuvent être mis en place.

De même, le nettoyage des cadres s'effectue soit manuellement par un opérateur (raclage et/ou nettoyage au jet d'eau sous pression), soit par une machine automatique.

Dans sa conception actuelle, il est donc quasiment impossible de renfermer le filtre dans une carrosserie, du fait des problèmes d'accès et de la hauteur de l'ensemble.

En résumé, les filtres actuels nécessitent une structure résistante très lourde, s'intègrent mal dans l'environnement de la salle de brassage, et sont donc encore mal acceptés par nombre de brasseurs.

Le but de la présente invention est d'éviter ces inconvénients et de permettre d'intégrer le filtre à maische dans la salle à brasser, comme le sont les autres éléments.

A cet effet, l'implantation de filtre à maische du type général défini au début est, conformément à la présente invention, essentiellement caractérisée en ce que ledit filtre à maische est intégré dans ladite dalle de plancher, laquelle , étant convenablement renforcée, sert ainsi de structure porteuse, ladite dalle supportant également la tête fixe, le bouclier de fermeture ainsi que la tête réglable, grâce à quoi ladite dalle peut reprendre les efforts de serrage dudit filtre, sans autre structure spécialement prévue à cet effet.

Le filtre se trouve ainsi réparti sur deux niveaux, les parties polluantes ou d'aspect moins propre étant regroupées au niveau inférieur dudit espace de brasserie.

Il est à noter que la tête fixe pourra ainsi être allégée, étant en appui sur ladite dalle, laquelle, bien entendu, sera en béton.

Avantageusement on peut encore prévoir des poutres métalliques propres à reprendre les efforts de traction et à servir de rails de roulement pour lesdits cadres du filtre-presse, mais ces poutres pourront bien entendu être beaucoup plus petites que les poutres habituelles, n'ayant pas à reprendre les efforts de flexion dus au poids propre du filtre et au poids propre du produit contenu dans le filtre. La conception proposée garantit également que les flexions des rails de roulement seront très faibles, supprimant les effets néfastes décrits plus haut.

Avantageusement aussi, on prévoit d'installer autour de l'ensemble situé au niveau supérieur un carénage amovible comportant des hublots pour l'observation et une porte d'accès, ce carénage étant connecté à une cheminée d'aspiration des buées.

De cette façon, l'ouverture du filtre ne provoquera plus la dispersion de buée dans la salle à brasser ; elle se fera en toute sécurité pour le personnel d'exploitation et les visiteurs éventuels. L'ensemble sera parfaitement intégré dans l'environnement de la salle de brassage.

Un mode d'exécution de l'invention est décrit ci-dessous à titre d'exemple nullement limitatif, avec référence aux figures du dessin annexé dans lequel :
- la figure 1 est une vue générale schématique de l'implantation, en coupe verticale ;
- la figure 2 est une demi-vue en coupe par la ligne II-II de la figure 1 ;
- la figure 3 est une vue simplifiée en coupe verticale, dans une position ouverte du filtre, permettant la mise en oeuvre des moyens de transport des plateaux ; et
- la figure 4 est une demi-vue en élévation de l'implantation dans sa configuration représentée à la figure 3.

Sur les différentes figures, la dalle portante du plancher de l'espace de brassage est référencée 1 et le filtre-presse à maische est référencé 2 et repéré schématiquement par des traits mixtes. La tête fixe, le bouclier de fermeture et la tête réglable pour le vérin de pressage 6 sont référencés respectivement en 3, 4 et 5.

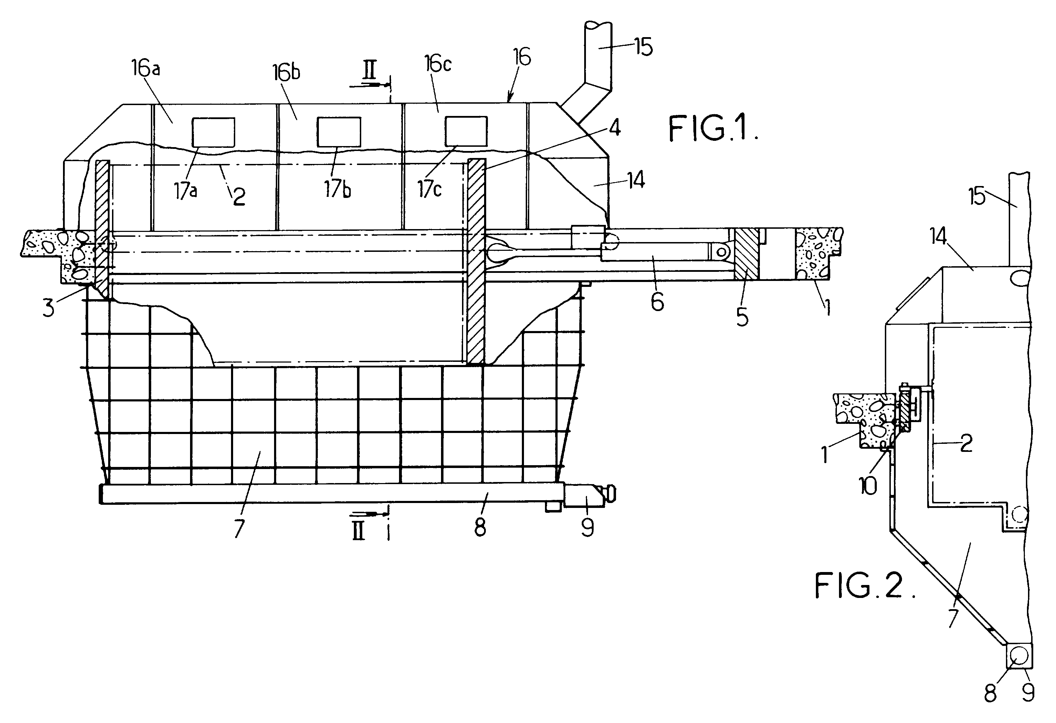

Sous le filtre 2 est prévue une trémie à drêches 7, pouvant être évacuée par une vis de transport 8 entraînée par un moteur électrique 9. L'un des deux rails qui ont été mentionnés plus haut est référencé en 10 sur la figure 2.

L'absence de structure porteuse du filtre rend l'implantation de ces dispositifs très facile, de même que l'accès aux plateaux et aux cadres. Les cadres peuvent être par exemple encastrés de façon à ce qu'environ 1/3 de leur hauteur (soit par exemple 0,80 m pour un plateau de 2 m x 2 m) dépasse sur le niveau supérieur. Ces plateaux seraient donc à hauteur d'homme et facilement accessibles.

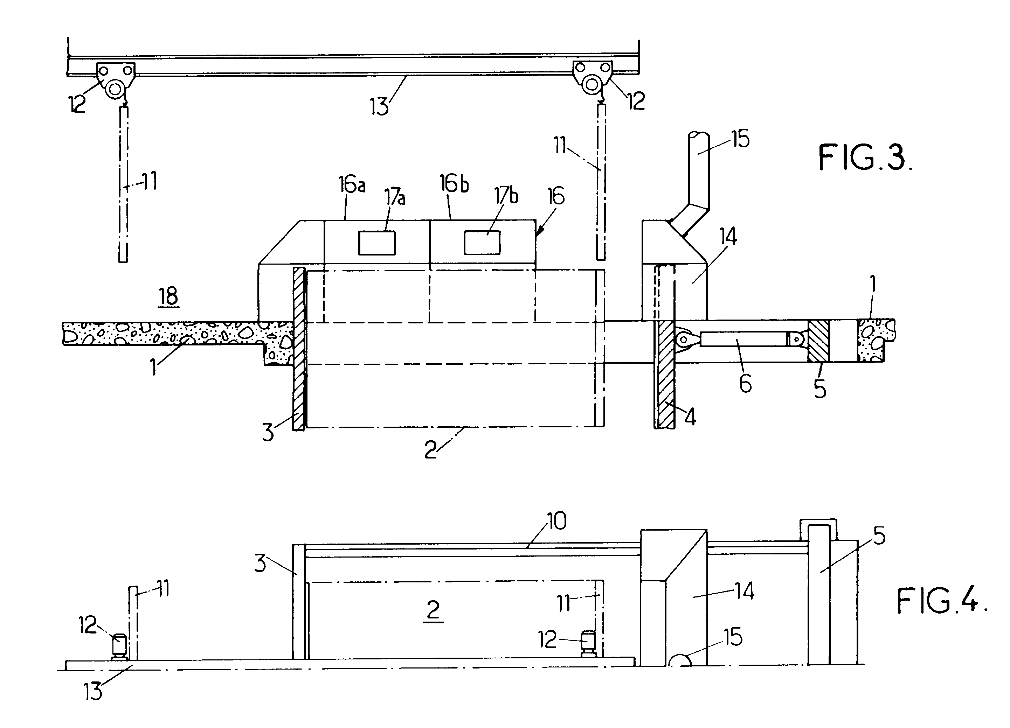

Enfin, le retrait des éléments 11 du filtre (cadres, plateaux ou plateaux chambrés) peut être assuré par un dispositif prévu au-dessus du filtre 2. Ce dispositif peut comporter des palans électriques à chaîne 12 propres à se déplacer sur un rail 13 du plafond. Bien entendu, ces moyens de transport sont mis en oeuvre après ouverture du capot fixe 14 équipé d'une cheminée 15 d'aspiration des buées et qui ferme le carénage 16. Ce carénage, propre à coiffer la partie supérieure du filtre 2, est constitué d'éléments amovibles 16a, 16b, 16c, ce dernier étant supposé enlevé sur la figure 3, pour la manutention des cadres du filtre. Chaque élément est pourvu d'un hublot 17a, 17b, 17c, ainsi que d'une porte d'accès.

La zone repérée 18, derrière la tête fixe 3, peut servir au stockage des plateaux.

Il va de soi que le vérin 6 peut être remplacé par un vérin à vis ou tout système équivalent.

A l'étage inférieur, c'est-à-dire sous la dalle de plancher 1, on peut prévoir d'installer, le cas échéant, la centrale hydraulique et les canalisations d'alimentation de maische et d'évacuation du moût.

Une implantation conforme à l'invention présente l'avantage d'un coût d'installation moindre, et de permettre une intégration facile du filtre-presse dans l'environnement de la salle à brasser. Il n'y a pas de dégagement de buées, et la sécurité des visiteurs est parfaitement assurée. Enfin, l'encombrrement de l'installation est tel que l'on peut entrer facilement dans les hauteurs sous plafond habituelles en brasserie.

## Revendications

1. Implantation de filtre à maische dans une usine de brasserie comportant, dans un espace de brassage à deux niveaux séparés par une dalle portante (1) de plancher, une cuve matière, une chaudière à houblonner et un filtre-presse à maische (2) à plateaux verticaux, ce filtre comportant un ensemble de cadres et de plateaux propres à être serrés entre une tête fixe et un bouclier de fermeture manoeuvré par un vérin en appui sur une tête réglable, les dispositifs de transfert de matière, d'agitation ou d'accès étant prévus au niveau inférieur, les cheminées d'extraction de buées et les couvercles étant visibles au niveau supérieur, caractérisée en ce que ledit filtre à maische (2) est intégré dans ladite dalle (1) de plancher, laquelle, étant convenablement renforcée, sert ainsi de structure porteuse, ladite dalle (1) supportant également la tête fixe (3), le bouclier de fermeture (4) ainsi que la tête réglable (5), grâce à quoi ladite dalle (1) peut reprendre les efforts de serrage dudit filtre (2), sans autre structure spécialement prévue à cet effet.

2. Implantation selon la revendication 1, caractérisée en ce qu'elle comprend en outre des poutres métalliques (10) propres à reprendre les efforts de traction et à servir de rails de roulement pour lesdits cadres du filtre-presse.

3. Implantation selon la revendication 1 ou 2, caractérisée en ce qu'elle comporte autour de l'ensemble situé au niveau supérieur un carénage amovible (16) comportant des hublots (17) pour l'observation et une porte d'accès, ce carénage étant connecté à une cheminée d'aspiration des buées (15).

## Patentansprüche

1. Einbau eines Maischefilters in ein Brauhaus, wobei in einem Braubereich mit zwei durch eine Tragplatte (1) getrennten Ebenen ein Materialbehälter, ein Hopfenkessel und eine Maischefilterpresse (2) mit vertikalen Platten angeordnet werden, dieser Filter eine Rahmenanordnung und Platten enthält, die zwischen einem feststehenden Ende und einer Schließabschirmung, welche mit Hilfe eines an einem verstellbaren Ende befestigten Stützzylinders bewegt wird, zusammengepreßt werden können, und wobei die Vorrichtungen zur Weiterleitung des Materials, die Antriebsvorrichtungen bzw. die Zugriffsvorrichtungen auf der unteren Ebene angeordnet sind, während sich die Dampfableitungsschächte und die Abdeckungen auf der oberen Ebene befinden, dadurch gekennzeichnet, daß der Maischefilter (2) in die Tragplatte (1) integriert ist und diese in geeigneter Weise derart verstärkt ist, daß sie eine tragende Struktur aufweist, wobei die Tragplatte (1) gleichermaßen das feststehende Ende (3), die Schließabschirmung (4) und das verstellbare Ende (5) haltert und die Tragplatte (1) somit die Druckkräfte des Filters (2) aufnehmen kann, ohne daß eine weitere spezielle Struktur zu diesem Zweck vorgesehen werden müßte.

2. Einbau eines Maischefilters gemäß Anspruch 1, dadurch gekennzeichnet, daß weiterhin Metallträger (10) vorhanden sind, die zur Aufnahme von Zugkräften und als Rollschienen für die Rahmen der Filterpresse dienen.

3. Einbau eines Maischefilters gemäß Anspruch 1 oder 2, dadurch gekennzeichnet, daß um die auf der oberen Ebene befindliche Anordnung herum eine feststehende Verkleidung (16) vorgesehen ist, die Fenster (17) zur Beobachtung sowie eine Zugangsklappe enthält, wobei die Anordnung mit einem Dampfzuleitungsschacht (15) verbunden ist.

## Claims

1. Installation of a wort filter in a brewery comprising, in a brewing area with two levels separated by a supporting floor slab (1), a mash copper, a hop boiler and a wort filter press (2) with vertical plates, this filter having an assembly of frames and plates capable of being clamped between a fixed head and a closing shield manoeuvred by a jack resting on an adjustable head, the devices for transferring mash, for stirring or for access being provided at the lower level, the ducts for extracting steam and the lids being visible at the upper level,
characterized in that the said wort filter (2) is incorporated into the said floor slab (1) which, being suitably reinforced, thus serves as a bearing structure, the said slab (1) also supporting the fixed head (3) and the closing shield (4) as well as the adjustable head (5), by virtue of which the said slab (1) can take up the forces clamping the said filter (2), without another structure specially provided for this purpose.

2. Installation according to claim 1, characterized in that it additionally comprises metal beams (10) capable of taking up the tensile forces and of acting as running rails for the said frames of the filter press.

3. Installation according to claim 1 or 2, characterized in that it includes, around the assembly situated at the upper level, a removable cowling (16) having portholes (17) for observation and an access door, this cowling being connected to a duct for extracting steam (15).
